# EUROPÄISCHE PATENTSCHRIFT

(11) **EP 1 520 191 B1**
(45) Veröffentlichungstag und Bekanntmachung des Hinweises auf die Patenterteilung: **06.06.2012**
(21) Anmeldenummer: 03762623.1
(22) Anmeldetag: 04.07.2003
(51) Int. Cl.: G02B 6/14, G02B 6/26

(54) **VORRICHTUNG UND VERFAHREN ZUR ERZEUGUNG EINER DEFINIERTEN MODENVERTEILUNG IN EINEM LICHTWELLENLEITER**
DEVICE AND METHOD FOR PRODUCING A DEFINED MODE DISTRIBUTION IN AN OPTICAL WAVEGUIDE
DISPOSITIF ET PROCEDE DESTINES A CREER UNE REPARTITION DE MODES DEFINIE DANS UN GUIDE D'ONDES OPTIQUES

(30) Priorität: 04.07.2002 DE 10230673
(43) Veröffentlichungstag der Anmeldung: 06.04.2005
(73) Patentinhaber: Weetech GmbH, 97877 Wertheim (DE)
(72) Erfinder: HENGL, Rudi, 97877 Wertheim (DE); HANSON, Josef, 64293 Darmstadt (DE)
(74) Vertreter: Hengelhaupt, Jürgen
(86) Internationale Anmeldenummer: PCT/EP2003/007177
(87) Internationale Veröffentlichungsnummer: WO 2004/005989

(56) Entgegenhaltungen:
- EP-A- 0 361 498
- EP-A- 0 442 731
- EP-A- 1 041 409
- US-A- 5 028 118
- US-A- 5 138 675
- US-B1- 6 185 346

## Beschreibung

Die Erfindung betrifft eine Vorrichtung und ein Verfahren mit den in den Oberansprüchen der Ansprüche 1 und 9 genannten Merkmalen.

Sowohl bei der produktionsbegleitenden als auch bei der Vor-Ort-Prüfung optischer Eigenschaften von Lichtwellenleitern steht - im Unterschied zur Produktvalidierung im Labor - eine zuverlässige Quantifizierung "gut/schlecht" im Mittelpunkt.

Speziell optische Polymerfasern, engl. Polymere Optical Fiber (POF), zeichnen sich durch einen relativ großen Kerndurchmesser (typisch: 980 µm) und eine hohe numerische Apertur (NA) aus. Diese Eigenschaften lassen sich vorteilhaft für eine einfache Koppelung der Fasern zum Beispiel unter Verwendung von "low cost"- Sende- und Empfangseinrichtungen nutzen. Dies führt zu einem weit verbreiteten Einsatz in der Automobilindustrie (Multimedia System). Die Messung optischer Eigenschaften von POF und damit die Qualitätsprüfung optischer Polymerfasern ist jedoch mit einigen Schwierigkeiten verbunden, da unter anderem eine starke Abhängigkeit von den optischen Ein- und Auskoppelbedingungen an den Faserenden besteht.

So werden innerhalb einer Stufen-Index-Profil-Faser höhere Moden stärker gedämpft als niedrigere Moden, was zu einer Änderung der Modenverteilung beim Durchlauf des Lichts durch die Faser führt. Erst bei großen Faserlängen nähert sich die Modenverteilung, unabhängig von den Einkoppelbedingungen des Lichts, einem Gleichgewichtszustand, der sog. Equilibrium Mode Distribution (EMD) an. Dieser stationäre Zustand wird in der Regel jedoch erst bei Faserlängen größer als 1 km erreicht. Da eine von der Länge der zu prüfenden optischen Faser (Prüfling) abhängige Modenverteilung ebenfalls zu einem längenabhängigen Dämpfungskoeffizienten führt, ist die Modengleichgewichtsverteilung (EMD) eine notwendige Voraussetzung, um eindeutig reproduzierbare Meßergebnisse, vor allem bei kurzen Faserlängen des Prüflings, zu erhalten. Dies wiederum ist notwendige Voraussetzung, um quantitative Aussagen über die Qualität eines Prüflings treffen zu können. Um eine Modengleichgewichtsverteilung (EMD) in einer zu prüfenden Faser zu erreichen, ist es aus EP 0 353 690 A2 bekannt, eine Standard-Polymerfaser helixartig (Acht-förmig) um mindestens zwei Zylinder zu wickeln. Hierdurch werden höhere Moden aufgrund der Krümmung abgestrahlt (Strahlungsmoden). Weiterhin können Moden ineinander umgewandelt werden (Modenkonversion) und aufgrund von Störungen, die an der Kern-Mantelfläche vorhanden sind, können aus einem Modus mehrere Moden entstehen (Modenkopplung).

Nachteilig an der in EP 0 353 690 A2 vorgeschlagenen Vorrichtung ist jedoch die erhebliche räumliche Ausdehnung (ca. 50mm × 90mm × 150mm), so dass eine Verwendung in einem kompakten Handtestgerät oder in Prüfmodulen, wie sie beispielsweise in einem Prüftisch verwendet werden, nicht effizient ist. Die baulichen Abmaße der Vorrichtung lassen sich aufgrund der verwendeten Zylinder auch nicht deutlich reduzieren.

Weiterhin nachteilhaft an der in EP 0 353 690 A2 vorgeschlagenen Vorrichtung ist es, dass diese Vorrichtung in Bezug auf Umgebungsbedingungen wie Temperaturschwankungen und mechanische Einflüsse, wie zum Beispiel Schockbelastung oder Vibration sehr anfällig ist. Weiterhin ist die Fertigung der in EP 0 353 690 A2 vorgeschlagenen Vorrichtung mit einem erheblichen Materialaufwand verbunden und geht daher mit einem Kostennachteil einher.

Ferner offenbart EP 0 442 731 A1 eine Vorrichtung zur Modenkonditionierung in einem Lichtwellenleiter bei dem Licht über einen Luftspalt von einem ersten Lichtwellenleiterstück in ein zweites Lichtwellenleiterstück übertragen wird. Dem Luftspalt folgt eine Lichtwellenleiterregion mit hoher Krümmung durch Aufwicklung des zweiten Lichtwellenleiterstücks. Während der Luftspalt die Moden höherer Ordnung unterdrückt und nur niedrige Moden durchlässt, arbeitet die Wicklung als Modenmischer der eine Modenverteilung wiederherstellt.

Es ist daher Aufgabe der vorliegenden Erfindung, eine Vorrichtung und ein Verfahren zur Erzeugung einer definierten Modenverteilung in einem Lichtwellenleiter, insbesondere einer Modengleichgewichtsverteilung (EMD) anzugeben, welche kompakt ausgebildet ist und wenig Bauraum erfordert. Weiterhin soll die erfindungsgemäße Vorrichtung gegenüber Umgebungsbedingungen wie Temperaturschwankungen oder mechanischen Einflüssen, zum Beispiel Schockbelastung oder Vibration möglichst unanfällig sein. Weiterhin soll die erfindungsgemäße Vorrichtung kostengünstig herstellbar sein sowie eine einfache Reinigung und Wartung ermöglichen.

Diese Aufgabe wird erfindungsgemäß gelöst durch die Merkmale im gekennzeichneten Teil des Anspruchs 1 (Vorrichtungsanspruch) und des Anspruchs 9 (Verfahrensanspruch) im Zusammenwirken mit den Merkmalen im Oberbegriff. Zweckmäßige Ausgestaltungen sind in den Unteransprüchen enthalten.

Dementsprechend wird eine Vorrichtung zur Lichtwellenleitung, umfassend eine Lichtquelle, eine Quellenfaser, eine Interfacefaser, und einen Luftspalt zwischen Quellenfaser und Interfacefaser, wobei die Lichtquelle mit einem ersten stirnflächenseitigen Ende der Quellenfaser optisch gekoppelt ist, und das zweite stirnflächenseitige Ende der Quellenfaser über den Luftspalt mit einem ersten stirnflächenseitigen Ende der Interfacefaser optisch gekoppelt ist, wobei das zweite stirnflächenseitige Ende der Interfacefaser mit einem Interface zur optischen Kopplung der Interfacefaser mit einem Lichtwellenleiter verbunden ist. Zwischen Lichtquelle und Quellenfaser ist ein Diffusor angeordnet. Die Größe des Luftspaltes ist derart ausgebildet ist, dass die Modenverteilung des eingekoppelten Lichts in der Interfacefaser einer Modengleichgewichtsverteilung (EMD) oder einer Modengleichverteilung (UMD) entspricht.

Dadurch, dass die erfindungsgemäße Vorrichtung zur Erzeugung einer definierten Modenverteilung in einem Lichtwellenleiter eine Lichtquelle aufweist, welche mit einem ersten stirnflächenseitigen Ende einer ersten optischen Faser optisch gekoppelt ist, und das zweite stirnflächenseitige Ende der ersten optischen Faser über einen Luftspalt mit einem ersten stirnflächenseitigen Ende einer zweiten optischen Faser optisch gekoppelt ist, wobei das zweite stirnflächenseitigen Ende der zweiten optischen Faser mit einem Interface zur optischen Kopplung der zweiten optischen Faser mit einem Lichtwellenleiter verbunden ist, kann durch entsprechende Ausgestaltung der Koppelgeometrie der Luftspalt zwischen den beiden optischen Fasern derart justiert werden, dass die Modenverteilung der eingekoppelten Leistung in den Lichtwellenleiter (Prüfling) der Modengleichgewichtsverteilung (EMD) entspricht. Hierdurch kann erfindungsgemäß auch bei kurzen Lichtwellenleitern (Prüflingen) mit einer Länge geringer als 10 m ein längenunabhängiger Dämpfungskoeffizient gemessen werden, in dem der zu vermessende Lichtwellenleiter (POF) über das Interface an die Vorrichtung gekoppelt wird. Weiterhin weist die erfindungsgemäße Vorrichtung bei geeigneter Dimensionierung der optischen Fasern geringe bauliche Abmessungen auf. Zur Vermeidung von Abbildungen der Lichtquelle ist am Ausgang der ersten optischen Faser ein Diffusor zur Streuung des Lichts zwischen Lichtquelle und erster optischer Faser vorgesehen.

Der Abstand zwischen dem zweiten stirnflächigen Ende der Quellenfaser und dem ersten stirnflächenseitigen Ende der Interfacefaser (zweite optische Faser bzw. die dem Interface zugewandte Faser) variabel. Dies bedeutet, dass der Luftspalt zwischen Quellenfaser und Interfacefaser in der Größe veränderlich ist. Vorzugsweise weist die Vorrichtung Mittel zur Justierung der Größe des Luftspaltes auf. Der Luftspalt bewirkt eine Dämpfung der Moden höherer Ordnung, um an der Koppelstelle zwischen Quellenfaser und Interfacefaser für die zu prüfende Faser (Lichtwellenleiter) eine Modengleichgewichtsverteilung (EMD) erzeugen zu können. Weiterhin kann durch den Luftspalt bei kurzem Stufenindex- POF (bis 100 m) eine Reduzierung modenabhängiger Dispersionseffekte zur Erhöhung des Bandbreitenlängenprodukts erreicht werden.

Dabei ist es in einer bevorzugten Ausführungsvariante vorgesehen, dass die Lichtquelle, die erste optische Faser und die zweite optische Faser zum Schutz vor Umgebungseinflüssen, innerhalb einer Verkapselung angeordnet sind. Das Interface ist vorzugsweise die Verkapselung durchdringend ausgebildet. Die Lichtquelle ist vorzugsweise eine Lumineszenzdiode.

Durch die erfindungsgemäße Ausgestaltung weist die Vorrichtung geringe bauliche Abmaße auf, so dass hierdurch ein Einsatz in portablen Handmessgeräten ermöglicht wird. Durch die beabstandete Anordnung (mittels Luftspalt) zwischen messgeräteseitiger Quellenfaser und prüflingsseitiger Interfacefaser kann in besonders einfacher Weise eine Reinigung bzw. ein Austausch der Interfacefaser vorgenommen werden. Der Grund für eine intervallmäßige Erneuerung der Interfacefaser ist die Verschmutzung derselben vor und nach der Prüfung auf Grund bestehender Umgebungsbedingungen, wie zum Beispiel Staub oder Feuchtigkeit.

Beim erfindungsgemäßen Verfahren zur Erzeugung einer definierten Modenverteilung in einem Lichtwellenleiter wird das innerhalb einer Quellenfaser verlaufende Licht über einen justierbaren Luftspalt in eine Interfacefaser optisch eingekoppelt und das innerhalb der Interfacefaser verlaufende Licht über ein Interface in einen Lichtwellenleiter optisch eingekoppelt. Durch die räumliche Ausgestaltung des Luftspaltes kann die gewünschte Modenverteilung, beispielsweise eine Modengleichgewichtsverteilung (EMD) oder eine Modengleichverteilung, die sogenannte Uniform Mode Distribution (UMD) erreicht werden. Nachstehend wird die Erfindung in einem Ausführungsbeispiel anhand der beigefügten Zeichnung näher erläutert.

Es zeigt:

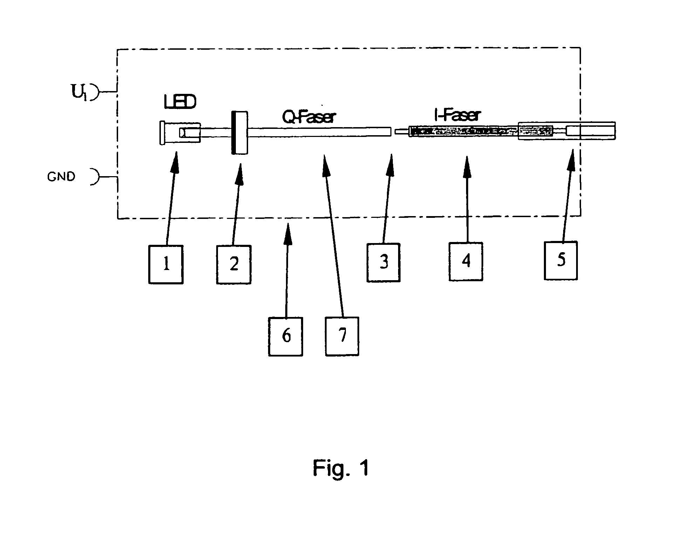

- Figur 1: eine erfindungsgemäße Vorrichtung zur Erzeugung einer definierten Modenverteilung in einem Lichtwellenleiter in schematischer Schnittdarstellung.

Wie in Figur 1 schematisch dargestellt ist, weist eine erfindungsgemäße Vorrichtung zur Erzeugung einer definierten Modenverteilung in einem Lichtwellenleiter eine in einer Verkapselung 6 angeordnete Lichtquelle 1 auf, welche vorzugsweise eine leistungsgeregelte Lumineszenzdiode, beispielsweise eine leistungsgeregelte Sendediode des Typs SFH 756 ist. Die Lichtquelle 1 wird über einen Diffusor 2 mit einem Streuwinkel α = 60° in eine kurze Quellenfaser 7 (erste optische Faser), welche eine optische Polymerfaser (POF) ist, eingekoppelt. Die Streuung des Lichts des von der Lichtquelle 1 ausgehenden Lichts im Diffusor 2 mittels einer Streuscheibe erfolgt zur Vermeidung von Abbildungen der Lichtquelle 1 am POF-Ausgang der Quellenfaser 7, welche ohne den Diffusor 2 vor allem bei relativ kurzer Koppelstrecke und großem POF-Durchmesser der Quellenfaser 7 auftreten können. Weiterhin erfüllt der Diffusor 2 die Aufgabe, die Lichtstreuung, welche vor allem für eine Modengleichverteilung, die sogenannte Uniform Mode Distribution (UMD) benötigt wird, zu erzeugen. Weiterhin reduziert die am Diffusor 2 erzeugte Streuung des Lichts bei großen POF-Durchmessern der Quellenfaser 7 den Einfluss des radialen mechanischen Spiels der einstellbaren Luftstrecke, welche den Luftspalt 3 zwischen Quellenfaser 7 und sich daran anschließender Interfacefaser 4 ausbildet.

Als Quellenfaser 7 und Interfacefaser 4 wird eine Stufenindex-Faser verwendet. Beide Fasern haben die gleichen optischen Eigenschaften (Numerischer Apertur NA = 0,5), unterscheiden sich aber hinsichtlich ihres Durchmessers. Im vorliegenden Ausführungsbeispiel beträgt der Kerndurchmesser mit Glading für die Quellenfaser 7 d_{Q} = 1500 µm und für die Interfacefaser 4 dᵣ = 1000 µm. Beide Fasern können aus Polymermaterial, z.B. Typ Toray, hergestellt sein. Die Länge der Fasern sollte l_{Q} = l_{I} = 25 mm nicht unterschreiten. Der Luftspalt 3 weist eine Größe von l_{L} = 1,5 mm auf. In einer alternativen Ausführungsvariante wird die Interfacefaser 4 als (massive) Glasfaser ausgeführt. Dabei ist es vorgesehen, dass die Interfacefaser 4 aus anorganischem Material (Glas) die gleichen optischen Eigenschaften wie eine entsprechende optische Polymerfaser aufweist. Dies bietet gegenüber der optischen Polymerfaser den Vorteil, dass eine Reinigung des Interfaces 5 erfolgen kann, ohne die Faseroberfläche mechanisch zu beschädigen (Riefenbildung). Am Ende der Interfacefaser 4 schließt sich das Interface 5 zur Schaffung einer Koppelstelle für die Messung des (hier nicht dargestellten) Prüflings (Lichtwellenleiter) an. Auf Grund des erfindungsgemäßen Luftspaltes zwischen Quellenfaser 7 und Interfacefaser 4 kann eine Dämpfung der Moden höherer Ordnung, wie sie sich in der Regel nur bei großen Faserlängen (größer 1 km) einstellt, erzeugt werden. Weiterhin ist bei kurzen Stufenindex-POF (bis 100 m) eine Reduzierung modenabhängiger Dispersionseffekte zur Erhöhung des Bandbreitenlängenprodukts möglich.

Die Erfindung ist nicht beschränkt auf die hier dargestellten Ausführungsbeispiele, vielmehr ist es möglich, durch Kombination und Modifikation der genannten Mittel und Merkmale weitere Ausführungsvarianten zu realisieren, ohne den Rahmen der Erfindung zu verlassen, welche in dem Ansprüchen definiert ist.

### Bezugszeichenliste

- 1: Lichtquelle
- 2: Diffusor
- 3: Luftspalt
- 4: Interfacefaser
- 5: Interface
- 6: Verkapselung
- 7: Quellenfaser

## Patentansprüche

1. Vorrichtung zur Lichtwellenleitung, umfassend eine Lichtquelle (1), eine Quellenfaser (7), eine Interfacefaser (4), und einen Luftspalt (3) zwischen Quellenfaser (7) und Interfacefaser (4), wobei die Lichtquelle (1) mit einem ersten stirnflächenseitigen Ende der Quellenfaser (7) optisch gekoppelt ist, und das zweite stirnflächenseitige Ende der Quellenfaser (7) über den Luftspalt (3) mit einem ersten stirnflächenseitigen Ende der Interfacefaser (4) optisch gekoppelt ist, wobei das zweite stirnflächenseitige Ende der Interfacefaser (4) mit einem Interface (5) zur optischen Kopplung der Interfacefaser (4) mit einem Lichtwellenleiter verbunden ist,
**dadurch gekennzeichnet, dass**
zwischen Lichtquelle (1) und Quellenfaser (7) ein Diffusor (2) angeordnet ist, und
die Größe des Luftspaltes (3) derart ausgebildet ist, dass die Modenverteilung des eingekoppelten Lichts in der Interfacefaser (4) einer Modengleichgewichtsverteilung (EMD) oder einer Modengleichverteilung (UMD) entspricht.

2. Vorrichtung nach Anspruch 1,
**dadurch gekennzeichnet, dass**
Lichtquelle (1), Quellenfaser (7), Luftspalt (3) und Interfacefaser (4) innerhalb einer Verkapselung (6) angeordnet sind.

3. Vorrichtung nach Anspruch 1 oder 2,
**dadurch gekennzeichnet, dass**
das Interface (5) die Verkapselung (6) durchdringend ausgebildet ist.

4. Vorrichtung nach einem der vorhergehenden Ansprüche,
**dadurch gekennzeichnet, dass**
die Lichtquelle (1) eine Primärlichtquelle ist.

5. Vorrichtung nach einem der vorhergehenden Ansprüche,
**dadurch gekennzeichnet, dass**
die Lichtquelle (1) eine Lumineszenzdiode ist.

6. Vorrichtung nach einem der vorhergehenden Ansprüche,
**dadurch gekennzeichnet, dass**
der Abstand zwischen dem zweiten stirnflächenseitigen Ende der Quellenfaser (7) und dem ersten stirnflächenseitigen Ende einer Interfacefaser (4) variabel ist.

7. Vorrichtung nach einem der vorhergehenden Ansprüche,
**dadurch gekennzeichnet, dass**
die Vorrichtung Mittel zur Justierung des Abstandes zwischen dem zweiten stirnflächenseitigen Ende der Quellenfaser (7) und dem ersten stirnflächenseitigen Ende der Interfacefaser (4) aufweist.

8. Vorrichtung nach einem der vorhergehenden Ansprüche,
**dadurch gekennzeichnet, dass**
die Quellenfaser (7) aus einer optischen Polymerfaser und die Interfacefaser (4) aus einer optischen Polymerfaser oder aus Glas besteht.

9. Verfahren zur Lichtwellenleitung, wobei innerhalb einer Quellenfaser (7) verlaufendes Licht über einen justierbaren Luftspalt (3) in eine Interfacefaser (4) optisch eingekoppelt wird und das innerhalb der Interfacefaser (4) verlaufende Licht über ein Interface (5) in einen Lichtwellenleiter optisch eingekoppelt wird, wobei
der Luftspalt (3) auf eine solche Ausdehnung justiert wird, dass die eingekoppelte Modenverteilung in der Interfacefaser (4) einen Gleichgewichtszustand (EMD) annimmt oder eine Modengleichverteilung (UMD) erreicht wird und
zwischen Lichtquelle (1) und Quellenfaser (7) ein Diffusor (2) zur Lichtstreuung angeordnet ist.

## Claims

1. A device for guiding optical waves, comprising
a light source (1), a source fibre (7), an interface fibre (4) and an air gap (3) between the source fibre (7) and the interface fibre (4), wherein the light source (1) is optically coupled to a first end face side of the source fibre (7) and the second end face side of the source fibre (7) is optically coupled to a first end face side of the interface fibre (4) via the air gap (3), wherein the second end face side of the interface fibre (4) is connected to an interface (5) for optically coupling the interface fibre (4) to an optical waveguide,
**characterised in that**
a diffuser (2) is arranged between light source (1) and source fibre (7) and
the size of the air gap (3) is such that the mode distribution of the coupled-in light in the interface fibre (4) corresponds to an equilibrium mode distribution (EMD) or a uniform mode distribution (UMD).

2. A device according to claim 1
**characterised in that**
light source (1), source fibre (7), air gap (3) and interface fibre (4) are arranged inside an encapsulation (6).

3. A device according to claim 1 or 2
**characterised in that**
the interface (5) is formed such that it penetrates the encapsulation (6).

4. A device according to any one of the preceding claims
**characterised in that**
the light source (1) is a primary light source.

5. A device according to any one of the preceding claims
**characterised in that**
the light source (1) is a light-emitting diode.

6. A device according to any one of the preceding claims
**characterised in that**
the distance between the second end face side of the source fibre (7) and the first end face side of an interface fibre (4) can be varied.

7. A device according to any one of the preceding claims
**characterised in that**
the device includes means for adjusting the distance between the second end face side of the source fibre (7) and the first end face side of the interface fibre (4).

8. A device according to any one of the preceding claims
**characterised in that**
the source fibre (7) consists of a polymer optical fibre and the interface fibre (4) consists of a polymer optical fibre or glass.

9. A method for guiding optical waves, wherein light running inside a source fibre (7) is optically coupled into an interface fibre (4) via an adjustable air gap (3) and the light running inside the interface fibre (4) is optically coupled into an optical waveguide via an interface (5), wherein
the air gap (3) is adjusted to such a dimension that the coupled-in mode distribution in the interface fibre (4) assumes a state of equilibrium (EMD) or a uniform mode distribution (UMD) is achieved and
between light source (1) and source fibre (7) a diffuser (2) is arranged for scattering the light.

## Revendications

1. Dispositif de guidage d'ondes optiques, comprenant une source lumineuse (1), une fibre de source (7), une fibre d'interface (4), et un entrefer (3) entre la fibre de source (7) et la fibre d'interface (4), la source lumineuse (1) étant couplée optiquement à une première extrémité côté frontal de la fibre de source (7), et la deuxième extrémité côté frontal de la fibre de source (7) étant couplée optiquement à une première extrémité côté frontal de la fibre d'interface (4) par le biais de l'entrefer (3), la deuxième extrémité côté frontal de la fibre d'interface (4) étant raccordée à une interface (5) pour le couplage optique de la fibre d'interface (4) avec un guide d'ondes optiques,
**caractérisé en ce que**,
entre la source lumineuse (1) et la fibre de source (7), il est disposé un diffuseur (2), et **en ce que**
la dimension de l'entrefer (3) est constituée de sorte que la répartition de modes de la lumière injectée dans la fibre d'interface (4) correspond à une répartition modale d'équilibre (EMD) ou à une répartition modale uniforme (UMD).

2. Dispositif selon la revendication 1,
**caractérisé en ce que**
la source lumineuse (1), la fibre de source (7), l'entrefer (3) et la fibre d'interface (4) sont disposés à l'intérieur d'une encapsulation (6).

3. Dispositif selon la revendication 1 ou 2,
**caractérisé en ce que**
l'interface (5) est constituée de façon à pénétrer dans l'encapsulation (6).

4. Dispositif selon l'une des revendications précédentes,
**caractérisé en ce que**
la source lumineuse (1) est une source lumineuse primaire.

5. Dispositif selon l'une des revendications précédentes,
**caractérisé en ce que**
la source lumineuse (1) est une diode luminescente.

6. Dispositif selon l'une des revendications précédentes,
**caractérisé en ce que**
la distance entre la deuxième extrémité côté frontal de la fibre de source (7) et la première extrémité côté frontal d'une fibre d'interface (4) est variable.

7. Dispositif selon l'une des revendications précédentes,
**caractérisé en ce que**
le dispositif présente des moyens pour régler la distance entre la deuxième extrémité côté frontal de la fibre de source (7) et la première extrémité côté frontal de la fibre d'interface (4).

8. Dispositif selon l'une des revendications précédentes,
**caractérisé en ce que**
la fibre de source (7) se compose d'une fibre polymère optique et la fibre d'interface (4) d'une fibre polymère optique ou de verre.

9. Procédé de guidage d'ondes optiques, la lumière se déplaçant à l'intérieur d'une fibre de source (7) étant injectée optiquement dans une fibre d'interface (4) par le biais d'un entrefer (3) réglable, et la lumière se déplaçant à l'intérieur de la fibre d'interface (4) étant injectée optiquement dans un guide d'ondes par le biais d'une interface (5),
l'entrefer (3) étant réglé sur une extension telle que la répartition de modes injectée dans la fibre d'interface (4) adopte une répartition modale d'équilibre (EMD), ou telle qu'une répartition modale uniforme (UMD) est atteinte,
et un diffuseur (2) étant disposé entre la source lumineuse (1) et la fibre de source (7) pour la diffusion de la lumière.
